# EUROPEAN PATENT APPLICATION

(11) **EP 3 939 944 A1**
(43) Date of publication of application: **19.01.2022**
(21) Application number: 21180216.0
(22) Date of filing: 18.06.2021
(51) Int. Cl.: C03B 19/02, B01D 46/00

(54) **METHOD OF MAKING A GLASS PLATE WITH THROUGH HOLES**

(30) Priority: 17.07.2020 IT 202000017398; 26.03.2021 IT 202100007406
(71) Applicant: VETROMECC s.a.s. di Sacchetto Gabriele & C, 35017 Piombino Dese (IT)
(72) Inventor: SACCHETTO, Gabriele, Piombino Dese (IT)
(74) Representative: Trentin, Michele

(57) **Abstract**

A method of execution of a glass plate (2) having a plurality of through holes (4) comprising at least one step in which to prepare at least one mould (7) having therein at least a plurality of needles (8) arranged in a matrix according to a direction transverse to the at least one mould (7) and a step which includes heating the at least one mould (7). Such a method of execution of a glass plate (2) also comprising a step in which at least molten glass is injected into the at least one mould (7), and then cooling the latter so that the at least molten glass solidifies to make at least the glass plate (2). Finally, the method of the invention comprises a step in which the glass plate (2) is decoupled from the at least one mould (7) so as to remove the plurality of needles (8) from the glass plate (2) to make the plurality of through holes (4) therein.

## Description

### Field of application

The present invention is applicable to the field of glass manufacturing. In particular, it relates to a method of execution of a glass plate for a plurality of applications, but particularly adapted to use for filtering and sanitizing air.

For the sake of simplicity, below we will refer to the non-exclusive use of the invention in the field of air filtration and sanitation.

### Background art

Nowadays, in order to ensure the safety of people inside enclosed environments, it is necessary to control the spread of pathogens by means of, firstly, cleaning and sanitizing the environments themselves, but also by treating the flow of air coming from outside.

Among the many systems used for prevention in the field of air treatment, there are particular devices in the prior art which combine mechanical filtration with ultraviolet treatment to prevent, or at least limit, the access of pathogens to the environments.

Such air filtering and sanitizing devices generally comprise a plastic filter, typically honeycomb-shaped, whose functionality consists in mechanically blocking the particles present in the air, including pathogens, having dimensions greater than those of the holes present in the filter itself.

In addition, as mentioned, such devices comprise an ultraviolet radiation emitter whose rays convey inside the openings present in the filters so as to irradiate the flow of passing air to eliminate any residual pathogens.

In other words, such filtering devices include the irradiation of perforated plastic slabs with ultraviolet light which, reflecting inside the holes themselves, sanitizes the flow of air passing through, thereby reducing the pathogenic load therein.

Therefore, the use of such known devices allows to combine the mechanical capacity of plastic filters, which retain the particles of predetermined size preventing the passage thereof inside closed environments, with the germicidal power of ultraviolet rays, which allow to sanitize the air by further reducing the bacterial load contained therein.

However, the use of plastic material for the construction of filters is unsuitable for obtaining an efficient sanitizing device, in fact, the natural opacity of the plastic makes it difficult to reflect ultraviolet light rays.

Furthermore, plastic materials, generally made by moulding, have imperfections inside the holes which, in addition to further altering the reflection of ultraviolet light rays, modify the width of the holes themselves, compromising the functionality of the mechanical filter which, due to the reduced opening of the holes, blocks particles whose passage should have been allowed.

In addition, the presence of defects in the execution of plastic filters entails the risk of the holes clogging with the consequent impairment of the mechanical blocking functionality of the device.

The drawbacks described thus far could be overcome by the use of glass filters which would allow to improve the reflection features and, therefore, the effectiveness of using a device comprising a mechanical filter and a UV light system.

However, in the prior art there are no methods of execution of glass elements shaped to be used as filters in the described filtration and sanitizing devices.

In fact, GB 2241233 A is known which describes a method for producing a perforated glass which includes heating a mould until a glass sheet is melted and subsequently inserting needles.

However, the multi-perforated plate made according to the method described in GB 2241233 A does not allow to obtain a plate free of imperfections, affecting the use thereof as a filter.

Furthermore, documents WO 2008/062643 A1 and WO 2012/074952 A1 are also known, which substantially describe a method for making a multi-perforated glass in which it is included to place a glass plate in a container and, after softening it by heating the container, perforation pins are inserted so as to make a plurality of holes. However, even by such methods it is not possible to overcome the above drawbacks.

### Presentation of the invention

The object of the present invention is to provide a method of execution of a glass plate which allows at least partially overcoming the drawbacks highlighted above.

In particular, an object of the present invention is to provide a method of execution of a glass plate adapted to be used as a filter. In other words, an object of the present invention is to provide a method of execution of a glass plate having a plurality of through holes so as to be able to mechanically prevent the passage of particles having predetermined dimensions.

Another object of the present invention is to provide a method of execution of a glass plate whose making holes eliminates, or at least limits, the presence of imperfections with respect to the plastic filters present in the prior art.

A further object of the present invention is to provide a method of execution of a glass plate having a plurality of through holes shaped to adequately reflect an ultraviolet light, irradiating the plate itself, to allow the sanitization of the air flow.

Said objects, as well as others which will become clearer in the following description, are achieved by a method of execution of one glass plate having a plurality of through holes in accordance with the claims which follow which are to be considered an integral part of the present patent.

In particular, the method of execution of the invention first comprises a step in which to arrange at least one mould having therein at least a plurality of needles arranged in a matrix in a direction transverse to the mould itself.

Subsequently, the method of the invention includes heating the mould and then injecting at least molten glass therein.

Afterwards, the mould is cooled to allow the molten glass to solidify, making the glass plate.

Finally, the method of execution of the invention includes decoupling the glass plate from the mould so as to remove from the plate itself the plurality of needles to make the plurality of through holes.

Advantageously, the method of execution of the invention allows to make a glass plate adapted to be used as a filter; in fact, the method allows to make a glass plate having a plurality of through holes which allows to mechanically prevent the passage of particles having predetermined dimensions.

Still advantageously, the method of execution of the invention allows to make a glass plate in which the imperfections present in the holes are less, if not null, than the defects of the plastic filters present in the prior art.

Still advantageously, the method of execution of the invention thus allows to make a glass plate shaped to reflect ultraviolet light so as to sanitize the flow of passing air more effectively than the known opaque plastic filters.

From what has been said, it is evident that the objects described are achieved by a glass plate having a plurality of through holes made with the method according to what is described above.

### Brief description of the drawings

Further features and advantages of the invention will become more evident in light of the detailed description of a preferred but non-exclusive embodiment of a method of execution according to the invention, illustrated by way of non-limiting example with the aid of the accompanying drawings, in which:

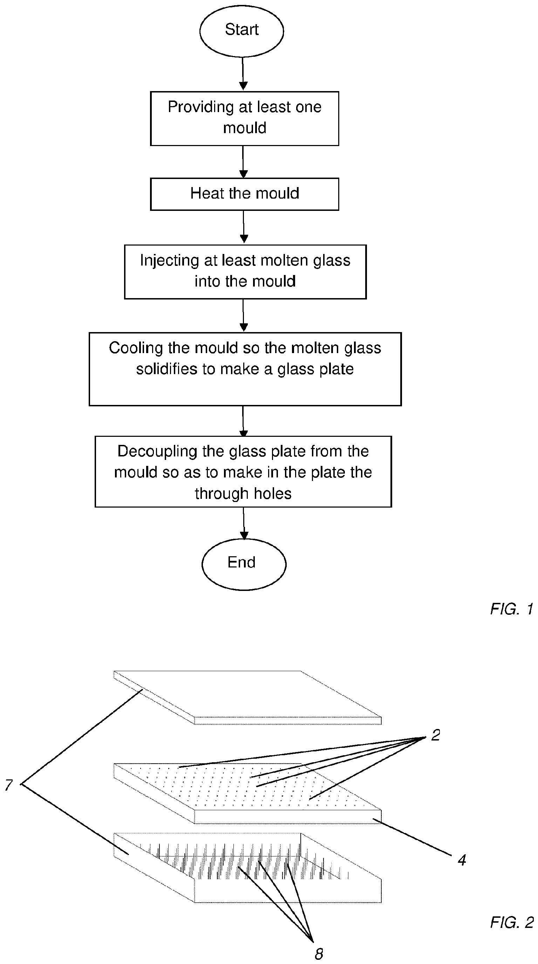

FIG. 1 depicts a block diagram of the method of execution according to the invention;
FIG. 2 depicts a detail of the method of execution of FIG.1.

### Detailed description of some preferred embodiments

With reference to the aforementioned figures, a method of execution of one glass plate **2** having a plurality of through holes **4** according to the invention is described herein.

In particular, the method of the invention comprises a first step in which a mould **7** is prepared having therein a plurality of needles **8** arranged in a matrix according to a direction transverse to the mould itself.

Subsequently, the mould **7** is heated and molten glass is injected therein. Obviously, the composition of the molten glass should not be considered limiting for embodiments of the invention where, for example, the molten glass is composed of crystalline glass or borosilicates.

In the embodiment of the invention which is described, the mould **7** is heated to a temperature between 400 °C and 500 °C, while the molten glass has a temperature which varies between 1000 °C and 1500 °C.

Next, the method of execution of the invention includes cooling the mould **7** so as to cause the temperature of the molten glass present inside the mould **7** to drop, which consequently solidifies, making a glass plate **2.**

Finally, the glass plate **2** is decoupled from the mould **7** so as to remove the matrix of needles **8** from the plate **2** to make a plurality of through holes **4** therein.

In other words, following the injection inside the hot mould **7,** the molten glass is distributed around the plurality of needles **8** also present inside the mould **2.** Following the solidification of the molten glass, which allows to make the glass plate **2,** the mould **7** is decoupled from the plate **2** itself so as to also remove the plurality of needles **8** to make a plate **2** having a plurality of through holes **4.**

Advantageously, the method of execution of the invention allows to make a glass plate **2** having a plurality of through holes **4** which can be adopted as a filter. In fact, it is evident that the presence of through holes **4** allow it to mechanically block any particles, contained in an air flow, having larger dimensions than the holes **4** themselves.

Furthermore, making the through holes **4** by using a plurality of needles **8** arranged in the matrix still advantageously allows to limit, if not even eliminate, the formation of imperfections which could compromise the use of the plate **2** as a filter.

In addition to this, allowing to make a plate **2** for a glass filter, the method of the invention still allows, advantageously, to improve the reflection of the mechanical filter by improving the germicidal action of the ultraviolet rays.

In view of this, in the case of using the glass plate **2** in filtering and sanitizing devices as described above, the method of execution of the invention still allows, advantageously, to make a mechanical filter with fewer imperfections and adapted to sanitize the air flow, irradiating it with ultraviolet light, in a better manner than the plastic filters present in the prior art.

Obviously, the technique of making the mould is not to be considered limiting for different embodiments of the invention such as, for example, in the case where the plurality of needles is made in a body independent of the mould itself.

According to another aspect of the embodiment of the invention which is described, the injection of molten glass inside the mould **7** occurs by casting it near the centre of the mould **7** itself.

Advantageously, the injection at the centre involves a homogeneous distribution of the molten glass inside the mould and, consequently, allows to limit the formation of imperfections while making the glass plate **2.**

However, such an aspect of the invention should not be considered limiting for different embodiments of the invention. In fact, even in the case of lateral injection, a homogeneous glass plate can be obtained. Moreover, in the case where the injection of the molten glass occurs laterally, it is possible to inject at pressures which vary from 100 to 150 bar.

Advantageously, the increase in the injection pressure allows to decrease the manufacturing times, also resulting in a decrease in production costs.

Furthermore, still advantageously, the lateral injection allows to distribute the molten glass inside the mould with higher pressures, limiting the overheating of the needles.

Still advantageously, the lateral execution of the injection allows to make a plate with greater thicknesses than those made with injection from above.

According to an embodiment of the method of the invention, not shown in the figure, it further comprises a step of cutting the glass plate which is typically, but not necessarily, conducted by mechanical vibration.

Advantageously, the cut allows to make glass sheets having a plurality of through holes and of any shape.

Furthermore, according to a further embodiment of the invention, also not shown in the figure, the mould further comprises one or more elements shaped to make breaking points in the glass plate to, still advantageously, facilitate the cutting step.

However, it is evident that the object of the invention is also a glass plate having a plurality of through holes as shown above.

A complete description of the glass plate of the invention is omitted here, since it would replicate what is already written relative to the same during the description of the method. What is observed is that it allows to achieve all the aforementioned advantages.

In light of the foregoing, it is understood that the method of execution of a glass plate of the invention achieves all the intended objects.

In particular, the method of execution of the invention allows to make a glass plate confirmed to be used as a mechanical filter.

Furthermore, the method of the invention allows to make through holes in a glass plate limiting, if not eliminating, the presence of imperfections.

Finally, the method of execution of the invention allows to provide a mechanical filter adapted to reflect ultraviolet light, irradiating the filter itself, to allow the sanitization of the flow of passing air more effectively than the filters, typically plastic, present in the prior art.

The invention might be subject to many changes and variants, which are all included in the appended claims. Moreover, all the details and steps may furthermore be replaced by other technically equivalent elements, and the materials may be different depending on the needs, without departing from the protection scope of the invention defined by the appended claims.

## Claims

1. A method of execution of one glass plate (**2**) having a plurality of through holes (**4**) comprising at least the following steps:
- preparing at least one mould (**7**) having therein at least a plurality of needles (**8**) arranged in a matrix according to a direction transverse to said at least one mould (**7**);
- heating said at least one mould (**7**);
- injecting at least molten glass inside said at least one mould (**7**);
- cooling said at least one mould (**7**) so that said at least molten glass solidifies to make at least said glass plate (**2**);
- uncoupling said glass plate (**2**) from said at least one mould (**7**) so as to remove said plurality of needles (**8**) from said glass plate (**2**) to make said plurality of through holes (**4**) in said glass plate (**2**).

2. Method of execution of at least one glass plate according to claim 1, **wherein** said injection of at least molten glass inside said at least one mould (**7**) occurs by casting said at least molten glass at least near the centre of said at least one mould (**7**).

3. Method of execution of at least one glass plate according to claim 1 or 2, further comprising a step of cutting said at least one glass plate.

4. Method of execution of at least one glass plate according to claim 3, **wherein** said step of cutting said at least one glass plate occurs by mechanical vibration.

5. Method of execution of at least one glass plate according to claim 3 or 4, **wherein** said at least one mould comprises one or more elements shaped to make breaking points in said at least one glass plate to facilitate the cutting of said at least one glass plate.

6. Method of execution of at least one glass plate according to one or more of the preceding claims, **wherein** said at least one molten glass injected into said at least one mould (**7**) has a temperature between 1000 °C and 1500 °C.

7. Method of execution of at least one glass plate according to one or more of the preceding claims, **wherein** said at least one mould (**7**) is heated to a temperature between 400 °C and 500 °C.

8. A glass plate having a plurality of through holes, **characterized in that** it is made by a method according to one or more of the preceding claims.
